# FASCICULE DE BREVET EUROPEEN

(11) **EP 0 343 092 B1**
(45) Date de publication et mention de la délivrance du brevet: **14.04.1993**
(21) Numéro de dépôt: 89430013.6
(22) Date de dépôt: 19.05.1989
(51) Int. Cl.: C02F 1/76

(54) **Procédé et installation de désinfection des eaux de baignade par de l'hypochlorite de sodium produit électrochimiquement in situ**
Verfahren und Anlage für die Entkeimung von Badewasser durch elektrochemisch in situ-erzeugtes Natriumhypochlorit
Method and plant for bathing water disinfection by electrochemical in situ production of sodium hypochlorite

(30) Priorité: 20.05.1988 FR 8806984
(43) Date de publication de la demande: 23.11.1989
(73) Titulaire: Billes, Jean-Louis, F-13600 La Ciotat (FR)
(72) Inventeur: Billes, Jean-Louis, F-13600 La Ciotat (FR)
(74) Mandataire: Moretti, René

(56) Documents cités:
- FR-A- 1 221 375
- GB-A- 1 426 017
- US-A- 3 458 414
- US-A- 3 718 540
- US-A- 4 085 028
- US-A- 4 171 256
- US-A- 4 381 240

## Description

La présente invention a pour objet des procédés et des installations de traitement électrochimique par électrolyse pour la désinfection des eaux de baignade par l'hypochlorite de sodium.

Le secteur de l'invention est celui des installations de traitement et de recyclage des bassins et l'assainissement des eaux, de baignade.

Une des applications principales de l'invention est le traitement des eaux de baignades aménagées, tels que celles de piscines publiques et des collectivités, ou celles des bassins de parcs aquatiques, mais aussi pour des eaux industrielles.

On rappelle que toutes les eaux distribuées par les réseaux d'alimentation publique sont contrôlées et traitées dans des stations utilisant divers procédés de traitement, suivant l'origine des eaux et leur utilisation. Ces procédés regroupent le dégrossissage à la prise d'eau, l'emmagasinage, la préchloration, l'aération, la clarification, la désinfection, l'adsorption, l'élimination des boues et tous les traitements spécifiques éventuels de correction des eaux naturelles, tels que la déferrisation ou la neutralisation, l'adoucissement etc....

Afin d'améliorer la qualité de l'eau ainsi distribuée, les techniques de traitement se sont affinés et la règlementation est de plus en plus stricte, surtout en matière d'eau potable et d'eau de baignade.

La présente invention porte essentiellement sur les traitements de désinfection et, en particulier, ceux des eaux de baignade dans des bassins.

L'ensemble des dispositifs, des procédés et des installations concernant les traitements et la réglementation de toutes les eaux est repris dans le mémento technique de l'eau établi par la Société DEGREMONT dans sa 17ème édition de 1978 distribué par TECHNIQUE ET DOCUMENTATION.

Nous nous intèresserons ici essentiellement au domaine des eaux de baignade, qui est celui de l'application de la présente invention.

Au chapitre 21 du mémento ci-dessus page 669, un exposé cite l'état de la technique concernant le traitement des eaux de piscine. En effet : Les eaux de piscines sont presque toujours régénérées en circuit fermé, c'est-à-dire que l'eau polluée progressivement par les baigneurs dans le bassin y est réintroduite après un traitement approprié. Une telle régénération est, en effet, beaucoup plus économique qu'un renouvellement continu de l'eau dont l'effet est de provoquer un refroidissement qu'il y a lieu de corriger par un réchauffage complémentaire onéreux. En outre, ce système permet une économie très importante d'eau, élément qui n'est pas négligeable dans certains cas.

Il est d'autre part nécessaire de procéder à un apport journalier d'eau neuve pour compenser les pertes d'eau diverses et pour réduire la concentration dans l'eau des composés organiques et ammoniacaux ou minéraux qui augmenterait continuellement si on ne procédait pas à ce renouvellement progressif de l'eau du bassin.

Le traitement de régénération des eaux de piscine, concerne plus particulièrement les "piscines publiques", mais des normes analogues doivent être retenues pour les "piscines collectives privées" et peuvent s'appliquer également avec quelques modifications aux "bassins de loisirs" que l'on rencontre de plus en plus souvent dans les aménagements des parcs de loisirs; beaucoup plus vaste que la piscine classique, généralement peu profond, le bassin de loisirs imite artificiellement l'environnement naturel : il peut comporter des plages de sable etc....

L'installation de régénération des eaux de piscine doit être conçue pour assurer des conditions sanitaires parfaites, mais sa conception est étroitement liée à une règlementation qui peut différer plus ou moins suivant le pays. On citera ici, à titre d'exemple, la règlementation française à laquelle on pourra se référer chaque fois qu'il n'existe pas de règlementation spéciale dans un pays donné.

Un certain nombre d'arrêtés et de décrets ont été pris en effet en FRANCE et en EUROPE, fixant pour les piscines et les baignades aménagées, d'une part, les critères de qualité et, d'autre part, les normes d'hygiène et de sécurité. On retiendra essentiellement l'arrêté du 13 Juin 1969, puis la directive NO. 76/160 du Conseil de la Communauté Européenne du 08.12.1975, qui se sont traduits par le dernier décret NO. 81.324 du 7 avril 1981 en FRANCE.

Les normes officielles sont assez strictes et imposent des installations de pompage, de préfiltration, de filtration et de désinfection, avec en particulier, un sens obligatoire de circulation de l'eau, suivant un système dit de l'hydraulicité inversée avec reprise d'eau polluée en surface et une arrivée des eaux traitées au fond des bassins.

La désinfection est un stade extrêmement important du traitement. Elle a un but hygiénique et un but esthétique. Le premier consiste à éviter la transmission des maladies par contagion entre les différents baigneurs. Le second consiste à éviter les développements d'algues microcospiques qui troublent l'eau en lui communiquant une couleur verte.

Les maladies transmissibles par l'eau des baignades mal ou insuffisamment traitée sont très nombreuses mais les plus fréquentes sont :
- les conjonctivites produites par un virus;
- les sinusites, angines et otites dues aux streptocoques et staphylocoques propagés par les mucosités nasales;
- certaines entérites dues aux mêmes microbes ou à certains virus à la suite d'ingestion de l'eau;
- certaines affections de la peau (eczémas) dont le bacille de Koch est parfois responsable;
- on a d'autre part attribué des cas de méningo-encéphalite, dont certains ont été mortels, à l'amibe Naegleria gruberi (qui est détruit par le chlore pourvu qu'il s'agisse de chlore réellement libre, et par l'ozone).

Pour éviter la contagion, il faut que l'eau du bassin possède un pouvoir désinfectant permanent très net.

Les procédés de désinfection les plus courants sont au nombre de trois :
- l'ozone, qui est le désinfectant le plus puissant que l'on connaisse; il ne donne pas de goût ni d'odeurs et il donne à l'eau une coloration bleutée. Cependant, il faut rajouter une désinfection complémentaire dans le bassin car le traitement à l'ozone manque de pouvoir désinfectant résiduel de l'eau, sensible alors aux contaminations ultérieures. L'eau ozoné est fabriqué sur place par un appareillage coûteux de technicité élaborée, nécessitant une énergie électrique de 20 W/m³ d'eau recyclée. Pour ne pas indisposer les baigneurs, il est essentiel que l'ozone soit complètement éliminé avant la réintroduction de l'eau dans les bassins. Ce type de désinfection par l'ozone a fait l'objet de demande de brevet tel que celui du 23.09.1987 en ALLEMAGNE par TAMIS et SHLOMO NO. DE. 360.249. Cependant, du fait du coût de l'installation et de l'absence de pouvoir désinfectant résiduel, à peine 5 % des piscines utilisent ce traitement.
- Le brome qui est le plus contesté des désinfectants. Il faut en effet un taux et un pH de l'eau élevés, ce qui est irritant et inconfortable. Avec un prix de revient important, ce traitement au brome est peu employé. Ce type de désinfection a fait l'objet de dépôt de brevet tel que celui de ROREN WATER TREATMENT SERVICE en ISRAEL, enregistré en FRANCE sous le NO. 82/21.929 du 28.12.1982.
- Le chlore et ses dérivés, qui est le plus couramment utilisé avec plus de 90% des piscines françaises équipées avec des installations utilisant ce type de désinfectant. On y utilise, soit du chlore gazeux (de plus en plus abandonné car dangereux), soit une solution d'hypochlorite de sodium (eau de javel), soit des granuleux ou galets incorporant le chlore et un agent stabilisant (produit le plus cher).

De nombreux brevets ont été demandés et déposés pour ce type de désinfection au chlore, tel que celui pour la production de chlore gazeux enregistré le 28 Mars 1980 sous le NO. FR. 80/06.949 par YATESDOW (U.S.A.), pour la javellisation des piscines NO. FR. 76/34.601 du 17.11.1976 par MORRISON DOUGLAS (G.B.), pour le traitement des eaux de piscine par AIR LIQUIDE (FR.) NO. 79/19.404 du 27.07.1979, pour des comprimés libérant du chlore dans l'eau par FMC CORP. (U.S.A) NO. FR. 2.243.156 du 04.04.1975.

Dans tous ces équipements, le chlore est donc apporté de l'extérieur sous une forme préparée, assez chère et nécessitant des rajouts par à coup, ce qui n'est souvent pas très confortable pour les usagers.

D'autre part, ces produits à rajouter nécessitent du transport et du stockage particulier car ils sont très dangereux, surtout sous forme liquide, leur manutention journalière est contraignante et ils sont périssables et instables.

Par ailleurs, le coût des produits à rajouter est assez élevé et de nombreuses piscines ne peuvent pas couvrir leur frais d'exploitation ne respectant pas alors les normes règlementaires. La DIRECTION POUR L'ACTION SANITAIRE ET SOCIALE peut alors difficilement imposes des contrôles et le public se trouve donc mal protégé malgré la règlementation.

Pour limiter ce coût et améliorer cet apport de produits extérieurs, divers fabricants et inventeurs ont imaginé des équipements pour fabriquer l'hypochlorite de sodium sur place par électrolyse directe de l'eau utilisée et chargée préalablement alors de sel de sodium : un des premiers brevets déposés dans ce domaine est celui de MM. GRAVES et GRAY déposé le 21 Mars 1959 sous le NO. FR. 1.221.375 et intitulé "Procédé et système pour chlorer l'eau des piscines ou nappes analogues", qui définit donc un principe d'installation de désinfection dans la famille de laquelle se situe la présente invention.

De même, on peut citer divers autres brevets tel que celui de la société DISCOVERY LTD déposé le 27.04.1973 en ANGLETERRE GB-A-1 426 017 et décrivant un système comportant un circuit secondaire de dérivation sur un circuit principal de traitement et comprenant un bac de mélange et de préparation d'eau salée et un bac de circulation sur des cellules d'électrolyse produisant l'hypochlorite.

Ces systèmes apportent certes une amélioration aux autres procédés et équipements cités précédemment, mais leurs rajouts sont toujours au coup par coup et non contrôlés, rendant leur usage inconfortable pour les usagers et hors normes.

Ce risque même de leur utilisation est même supérieur à celui des produits rajoutant le chlore directement de l'extérieur, si bien qu'à ce jour c'est surtout ces derniers qui sont utilisés avec les inconvénients déjà cités.

En effet, il faut d'une part pour le confort que le pH soit compris entre 6,9 et 7,7 et d'autre part, une teneur en chlore actif règlementaire dans le bassin entre 0,4 et 1,4 mg/litre..

Il est très difficile de maintenir ces deux valeurs dans les installations actuelles et un écart provoque soit une mauvaise protection des usagers, soit un inconfort.

Le problème posé est de pouvoir assurer une désinfection des eaux en particulier dans les piscines, telle que la qualité des eaux soit conforme à la règlementation quel que soit le nombre d'usagers et sans utiliser des produits actifs de manipulation difficile et onéreux apportés de l'extérieur.

Une solution au problème posé objet de la présente invention est un procédé de désinfection des eaux par traitement d'hypochlorite de sodium, en particulier pour les eaux de bassins de baignade, qui sont recyclées, d'une part dans un circuit principal de régénération comportant, entre autres, un système de pompage refoulant dans le fond desdits bassins et, d'autre part, dans un circuit secondaire de dérivation en parallèle de ce circuit principal et comportant au moins un bac de mélange pour la préparation d'une solution de chlorure de sodium et des cellules d'électrolyse de tout type, dans des conditions telles qu'elle décompose le chlorure de sodium suivant des réactions électrochimiques connues, dans lequel :
- on prépare ladite solution de chlorure de sodium à un dosage au moins égal à 6 g/litre;
- on mesure dans ledit circuit principal le pourcentage de chlore actif contenu dans l'eau du bassin et on compare cette mesure à un niveau de consigne fixé et compris dans une plage qui peut être celle exigée par la règlementation;
- on mesure également dans le circuit principal de régénération le niveau d'acidité de l'eau ou PH et on le compare par rapport à un niveau de consigne optimum respectant les normes règlementaires et pour le meilleur fonctionnement desdites cellules électrochimiques ;
- on injecte alors dans le circuit principal la solution d'acide chlorhydrique dilué préparé dans un bac de mélange secondaire, jusqu'à ce que le niveau d'acidité soit remonté au niveau de consigne;
- on sale au moins une partie de l'eau du circuit principal par addition de ladite solution de chlorure de sodium préparée dans le bac de mélange ;
- on fait passer une quantité déterminée de cette eau salée à travers lesdites cellules d'électrolyse pour obtenir la quantité d'hypochlorite de sodium nécessaire pour maintenir le taux de chlore actif à son niveau de consigne.

Une autre solution au problème posé est une installation de désinfection des eaux par le traitement à l'hypochlorite de sodium, en particulier de bassins de baignade, comportant, d'une part, un circuit principal de régénération composé entre autre d'un système de pompage, refoulant dans le fond desdits bassins et, d'autre part, au moins un circuit secondaire de dérivation en parallèle de ce circuit principal et comportant au moins un bac de mélange, contenant une solution de chlorure de sodium et des cellules d'électrolyse de tout type et qui sont réglées de manière connue de telle façon que le chlorure de sodium contenu dans l'eau qui passe à travers elles, soit décomposé pour obtenir de l'hypochlorite de sodium, ladite installation comporte, en outre :
- des moyens pour renouveler la solution de chlorure de sodium préparée dans ledit bac de mélange d'une part, par des rajouts extérieurs de sel, et d'autre part, par de l'eau du circuit principal déviée à la demande, de telle façon que la solution est concentrée à un dosage minimum de 6 g/litre;
- au moins une sonde de mesure en continu par cycle de taux de chlore actif dans le circuit principal;
- un autre circuit secondaire, indépendant de celui contenant lesdites cellules et branché en dérivation sur le circuit principal et composé d'un bac contenant une solution concentrée d'acide chlorhydrique renouvelée, d'une part, par des rajouts extérieurs d'acide et, d'autre part, par de l'eau du circuit principal déviée à la demande et réinjectée dans celui-ci pour y conserver un taux d'acidité PH déterminé, lequel taux est contrôlé par une sonde de mesure, placée sur le circuit principal ou le circuit secondaire alimentant les cellules d'électrolyse ;
- des vannes de dérivation et de by-pass et des moyens de type pompes doseuses et de circulation, qui permettent, d'une part, de saler à partir du bac de mélange une quantité déterminée de l'eau du circuit principal et, d'autre part, de diriger tout ou partie de cette eau salée vers ladite cellule d'électrolyse afin d'obtenir dans le circuit principal un taux de chlore actif correspondant à un taux de consigne déterminée.

Le résultat est un nouveau procédé et une nouvelle installation de traitement pour la désinfection des eaux, en particulier dans les bassins de traitement pour la désinfection des eaux, en particulier dans les bassins à circuit fermé de régénération destinés à la baignade.

Les avantages de tels systèmes sont multiples tant sur le plan de l'efficacité, du confort, de l'adaptation à tout type de bassin que sur le plan économique.

Sur le plan de l'efficacité, la fabrication d'hypochlorite sur place permet de s'adapter aux besoins immédiats avec donc un temps de réponse très court et ainsi une protection réelle des usagers par respect permanent des normes.

Sur le plan du confort, les utilisateurs n'auront pas d'à coups d'apport de chlore trop important et trop rapide, et le procédé assure en même temps, grâce à un pourcentage de chlore actif toujours présent, un traitement algicide en fongicide.

D'autre part, ce procédé évite le rajout de stabilisants, en général de l'acide isocyanurique, qui est souvent incorporée dans les produits apportant le chlore nécessaire pour que celui-ci ne s'évapore pas trop vite suivant la température et l'hygrométrie extérieure. Or ce stabilisant, lui n'est pas consommé, et ne doit pas avoir une concentration supérieure à 75 ppm. Aussi, il est nécessaire de renouveler l'eau pour réduire sa concentration, ce qui dans certains cas peut nécessiter plus de 30 litres/jour par baigneur d'eau neuve.

Dans le présent procédé, il n'y a pas besoin de tels stabilisants, où il sera à dose faible permanente sans rajout, puisque le chlore est fabriqué sur place. De plus, ce stabilisant retardé et diminue l'action bactéricide des désinfectants dans certains cas, et il vaut mieux l'éviter, ce qui est possible avec le présent procédé.

Un autre avantage du présent procédé est son absence de risque vis à vis du personnel chargé de l'entretien des piscines, qui ne manipule plus que peu de produits dangereux. Toute la partie traitement peut en effet être automatisée et fonctionner sans surveillance et en toute sécurité.

L'installation nécessaire étant incorporable dans les circuits de pompage existants de toute façon pour tout bassin, l'investissement correspondant est, de plus, rapidement récupéré par la différence entre les prix des produits contenant directement l'hypochlorite de sodium et celui des produits nécessaires au procédé et qui sont quatre à dix fois moins chers. Les responsables de piscine peuvent donc, tout en restant dans leur budget, assurer le respect des normes règlementaires.

L'application des procédés et des installations objet de la présente invention est le traitement pour la désinfection des eaux de baignade dans tout type de bassins, tels que ceux des piscines publiques et collectives, des piscines de compétition de type olympique, et ceux des parcs aquatiques de loisirs. Lesdits bassins peuvent être uniques, multiples et/ou de type mixte suivant le cas, l'installation correspondante pouvant alors être modulée et adaptée à chaque besoin.

La description suivante se réfère aux dessins annexés qui représentent, sans aucun caractère limitatif, deux exemples de réalisation d'installations suivant l'invention, l'un pour un bassin de piscine publique que l'on peut saler et l'autre par un bassin de piscine que l'on ne peut pas saler comme ceux de compétition. Ces deux exemples simplifiés ne sont donnés qu'à titre d'illustration concrète, en particulier avec un seul bassin chacun alors que les procédés et les installations décrits peuvent être appliqués et adaptés à des équipements comportant plusieurs bassins d'un même type ou des deux types, eau de bassin salée et non salée, et pouvant nécessiter des niveaux de chlore différents.

Dans les parcs aquatiques, il peut être envisagé de traiter par exemple indépendamment sept bassins ayant alors des besoins différents et disposant d'un seul circuit général de régénération. Le choix entre chacun des deux types d'installations décrits dans les figures suivantes est fonction de l'installation,existante ou non et des besoins.

La figure 1 représente un schéma d'installation de traitement de l'eau d'un bassin pouvant être salée.

La figure 2 représente un schéma d'installation de traitement de l'eau d'un bassin ne devant pas être salée.

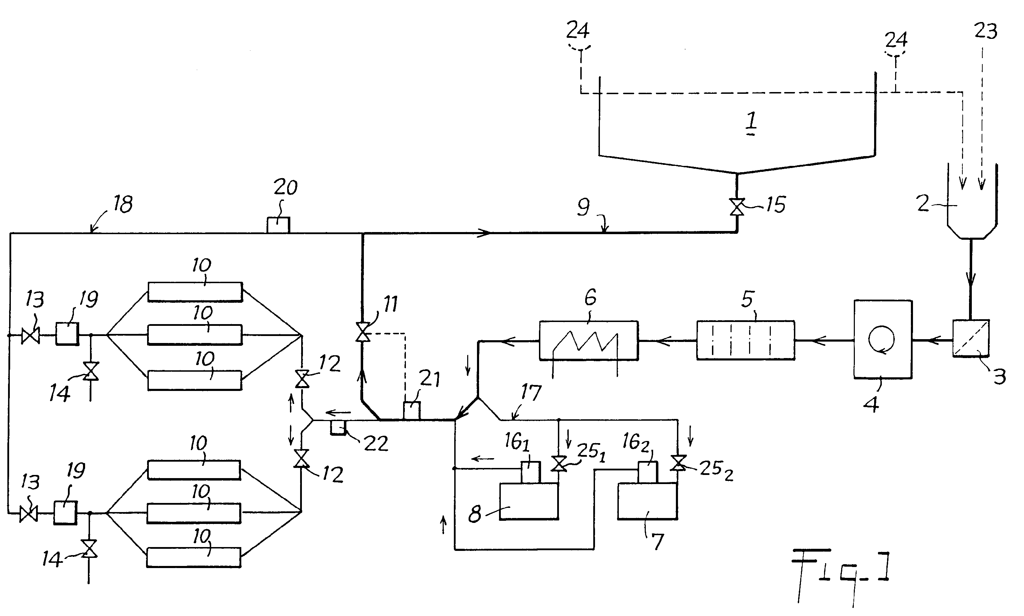

La figure 1 est un schéma d'installation pour le traitement par électrolyse en vue de la désinfection de l'eau d'un bassin 1, devant recevoir par exemple du public et pouvant être salée en permanence.

La règlementation impose une certaine qualité de salubrité en fixant entre autre des normes de teneurs en agent actif de désinfection garantissant ainsi aux usagers une propreté minimum. En particulier en 1981, mais cela peut changer ultérieurement et le présent procédé et installation peuvent s'adapter à ces modifications, l'article 5 de l'arrêté du 7 Avril 1981 fixe que la teneur en chlore libre actif dans l'eau des bassins soit comprise entre 0,4 et 1,4 mg/litre, le teneur en chlore totale ne doit pas excéder de plus de 0,6 mg/litre de la teneur en chlore libre et le pH doit être compris entre 6,9 et 7,7. Par ailleurs, l'annexe I décret du 7 Avril 1981 exige entre autre une transparence de l'eau et une non irritabilité pour les yeux, la peau et les muqueuses.

Ce schéma de la figure 1 comporte un circuit principal de régénération 9 connu, qui fonctionne suivant le principe de l'hydraulicité inversée. L'eau du bassin 1, qui est donc ici salée, est recueillie dans une goulotte de débordement 24 placée au niveau de la surface de l'eau. L'eau se déverse ensuite dans un bac de reprise 2 où l'on effectue, d'une part des apports éventuels de chlorure de sodium NaCl diluée et les compléments d'eau neuve nécessaire 23 pour maintenir le niveau dans le bassin et assurer un renouvellement éventuel. Cette eau est alors aspirée par des pompes 4 à travers un préfiltre 3 pour être refoulée dans un système de filtration 5, puis dans un réchauffeur 6, avant d'être envoyée au fond du bassin 1 à travers la vanne d'arrêt 15.

On dispose sur ce circuit connu qui peut être déjà installé deux circuits secondaires 17 et 18 en dérivation.

Le premier circuit 17 comporte lui-même deux circuits en parallèle composés d'une part d'un bac 7 contenant une solution concentrée de chlorure de sodium NaCl, et d'autre part d'un bac 8 contenant une solution concentrée d'acide chlorhydrique. Ces deux bacs sont alimentés pour garder un niveau constant à travers deux vannes 25₁, 25₂. Des rajouts de produit de base sont faits régulièrement par ailleurs dans ces bacs pour maintenir dans ceux-ci un niveau de concentration supérieure à celui demandé dans le circuit 9.

Le bac 7 est équipé d'une pompe doseuse 16₂, pilotée manuellement ou automatiquement par la sonde salinométrique 22 placée à l'entrée du deuxième circuit secondaire 18 et qui mesure le taux de chlorure de sodium contenu dans le circuit principal. Pour des raisons d'optimisation technique d'une part liée à l'efficacité du traitement électrochimique des cellules 10, et de confort des usagers, ce taux est choisi faible et peut être fixé par exemple entre deux seuils compris entre 2 et 6 g/litre d'eau. Quand le taux mesuré par la sonde 22 tombe au niveau du seuil minimum fixé, la pompe doseuse 16₂ se met en marche et rajoute de la solution de chlorure de sodium dans le circuit principal jusqu'à ce que le seuil supérieur soit atteint.

Le bac 8 est équipé également d'une pompe doseuse 16₁ pilotée manuellement ou automatiquement par la sonde 20 placée à la sortie du deuxième circuit secondaire 18 et qui mesure le pH de l'eau. Pour des raisons de règlementation et d'optimisation technique pour la mesure exacte du chlore actif par la sonde 21, ce taux de pH peut être fixé autour de 7,1 à 7,4.

Le deuxième circuit secondaire 18 comporte outre les deux sondes 20 et 22, une ou deux vannes d'entrée 12, commandées conjointement en manuel ou en automatique, avec la vanne 11 du circuit principal, afin de régler le débit respectif passant dans les deux circuits. Ces vannes sont pilotées en fonction de la mesure du chlore actif HC10 relevé par la sonde 21. On se fixe en effet deux seuils compris dans la fourchette règlementaire de taux admissible qui est depuis 1981 entre 0,4 et 1,4 mg/litre et qui pourrait changer ultérieurement. Quand le taux mesuré par la sonde tombe au seuil minimum fixé ou à intervalle de cycle prédéterminé, les vannes de by-pass 11 et 12 envoient alors du débit d'eau dans le circuit secondaire 18 pour être traité dans les cellules électrochimiques 10. Celles-ci peuvent être du type bipolaire à plaque de titane revêtues d'oxyde de ruthénium, alimentées en courant continu basse tension variable jusqu'à 48 V s, de préférence avec un maximum de 32 V sous une intensité de 300 Ampères par m², pour traiter l'eau qui est à basse concentration saline, soit de 2 à 30 g/l par exemple.

Dans ces cellules 10, la réaction d'électrolyse globale suivante se produit : NaCl + H₂0 → NaC10 + H₂, réparti entre la cathode et l'anode. On a donc une production locale de NaC10 (hypochlorite de sodium ou eau de javel) directement utilisable et conforme à la règlementation à partir du chlorure de sodium NaCl prélablement placé en solution dans l'eau du bassin.

Suivant le volume du bassin 1, le débit d'eau circulant dans le circuit 9 et la pollution prévisible liée au nombre de baigneurs usagés, l'installation comprend plusieurs cellules placées en parallèle et pouvant être activées par circuit indépendant, ici, nous avons figuré à titre d'exemple deux groupes de trois cellules.

A la sortie de ces cellules dotées d'une vanne de vidange 14, d'une vanne d'arrêt 13 et d'un contrôleur de débit 19, l'eau est renvoyée directement dans le circuit principal 9.

Quand le taux de chlore actif NaC10 mesuré par la sonde 21 atteint ensuite le seuil haut fixe, on ferme les vannes 12 et on arrête le fonctionnement des cellules 10 et on ouvre en grand la vanne 11.

On peut noter qu'au lieu d'avoir un fonctionnement par deux seuils haut et bas, on peut avoir un fonctionnement par cycle de durée déterminée avec un seul seuil de consigne haut pour chaque taux NaCl et NaC10. Comme nous l'avons évoqué dans cette description, les fonctionnements des sondes, des vannes, des cellules et des pompes peuvent être contrôlés et opérés manuellement, mais aussi automatiquement, à partir d'un automate programmable commandant une armoire de régulation. Celle-ci reçoit alors en information d'entrée, les mesures envoyées par les sondes 20, 21 et 22, les niveaux de liquide dans les bacs 7 et 8, les valeurs de débitmètre 19 et tout signal d'alarme de défaut.

On fixe dans la mémoire du programme de l'automate des points de consigne correspondant aux seuils de consigne définis pour chaque taux de NaCl, HCl et NaC10, et qui peuvent être changés par l'utilisateur.

On connaît par ailleurs le rendement des cellules en fonction de leur intensité d'alimentation du débit et de la salinité de l'eau, et on peut donc calculer le temps nécessaire et par palier le nombre de cellules à mettre en fonctionnement simultané pour faire remonter le taux de NaC10 au seuil maximum fixé à partir du seuil minimum fixé ou de la mesure de la sonde 21 si l'on choisit un traitement par cycle.

On peut définir en effet des durées de cycle, par exemple de 10 mn au début desquels toutes les mesures des sondes sont relevées et comparées par rapport au seuil maximum, puis on calcule le débit, le temps théorique et le nombre de cellules nécessaire pour le traitement de l'eau afin de remonter la teneur de C10 et de NaCl à ces seuils maximum, tout en maintenant une teneur de pH dans la fourchette choisie. L'automate de régulation commande alors pendant le temps calculé l'ouverture des vannes, la mise en route des pompes et des cellules correspondant aux résultats dudit calcul.

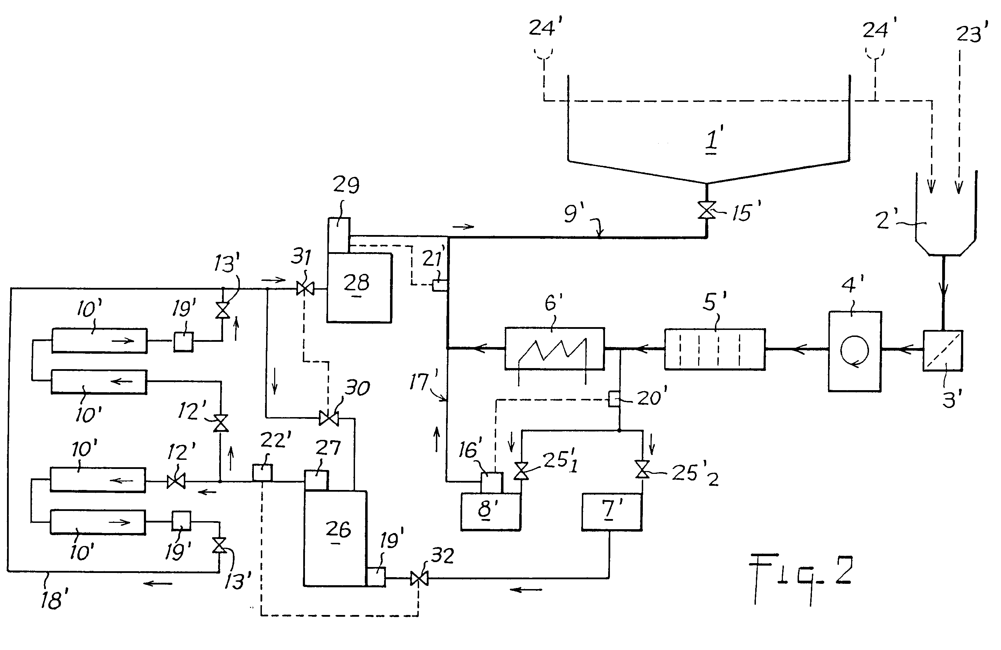

La figure 2 est un schéma d'installation pour le traitement par électrolyse, en vue de la désinfection de l'eau d'un bassin 1′ devant recevoir par exemple du public, mais ne devant pas être salée, soit pour des raisons de compétition, soit pour des raisons pratiques de régulation quand il y a plusieurs bassins à traiter comportant un seul circuit principal de régénération, alors que leur besoins en chlore actif peut être différent.

Les critères et la règlementation sont bien sûr identiques à ceux décrits dans la figure 1. On retrouve ainsi en commun avec le premier schéma sans qu'il soit la peine d'en reprendre le détail : un circuit principal de régénération 9′, des caniveaux périphériques 24′, des bacs de reprise 2′, un rajout d'eau neuve 23′, un préfiltre 3′, des pompes 4′, un système de filtration 5′, un réchauffeur 6′ et une vanne d'arrêt 15′.

On dispose sur ce circuit connu, qui peut être déjà installé, deux circuits secondaires 17′ et 18′ en dérivation.

Le premier circuit 17′ est équivalent à une des branches du circuit 17 de la figure 1. Il comporte un bac 8′ contenant une solution concentrée d'acide chlorhydrique alimenté à travers une vanne 25′₁ par le circuit principal. Cedit bac est équipé d'une pompe doseuse 16′₁, pilotée manuellement ou automatiquement par la sonde 20′ placée à l'entrée de cedit circuit 17′ et qui mesure le pH de l'eau. Le fonctionnement et les taux de pH sont identiques à ceux de la figure 1.

Le deuxième circuit 18′ se referme aussi sur le circuit principal mais comporte une boucle fermée, des bacs tampons 26 et 28, qui n'existent pas dans le schéma de la figure 1.

A l'entrée dudit circuit 18′, on trouve le bac 7′ contenant une solution concentrée de chlorure de sodium NaCl, alimentée d'une part par le circuit principal à travers une vanne 25′₂ régulée pour garder un niveau constant dans ledit bac, et d'autre part par des rajouts de produits de base pour maintenir dans celui-ci un niveau de concentration au moins égal à celui réclamé dans ce circuit secondaire 18′ mesuré par la sonde 22′. Celle-ci mesure en effet la teneur en NaCl, que l'on compare à un point de consigne donné. Dans une telle configuration, on pourra préférentiellement se donner un taux de 30 à 35 g/litre correspondant à la salinité de l'eau de mer et permettant un bon rendement des cellules électrochimiques 10′ avec un débit faible.

Ce taux relativement élevé est hors du circuit principal qui reste non salé puisque traité entièrement dans ce circuit 18′. Pour chaque cycle de fonctionnement, on ouvre alors la vanne 32 et on remplit le bac 26 dit de chloration avec la saumure du bac 7′, à travers un débitmètre 19′. Quand ce bac est rempli avec la solution de NaCl au taux fixé, on isole le circuit 18′ en boucle fermée. Si ces deux conditions de remplisage et de taux ne sont pas respectées, le traitement ne peut pas commencer. Les vannes 31 et 32 étant alors fermées, on ouvre la vanne 30, toutes les autres vannes 12′ et 13′ restant ouvertes, et on assure un débit de circulation par une pompe 27 à travers les cellules électrochimiques 10′ que peuvent être du même type que celles définies dans la figure 1 et qui sont disposées en parallèles et en série pour traiter le débit maximum circulant dans ce circuit secondaire, lui-même dépendant des volumes du bac 26 et de la durée des cycles, définis eux-mêmes en fonction du volume du bassin l' et de son taux de fréquentation des usagers.

La durée du traitement par les cellules, suivant le même fonctionnement que défini dans la figure 1 est calculée pour qu'en fin de cycle le taux de NaClO ou la concentration de chlore contenu dans le bac de chloration 26 soit par exemple de 10 à 70 g/litre et que le chlorure de sodium soit pratiquement éliminé par transformation.

Ledit bac de chloration reste ainsi plein jusqu'à ce que ledit bac dit de stockage 28 soit vide. On ouvre alors la vanne 31 en fermant simultanément la vanne 30 et on transfère par la pompe 27 la solution concentrée à 2g/litre de NaC10 du bac 26 dans le bac 28. On inverse ensuite la position des vannes 30 et 31 et un nouveau cycle de préparation de solution en circuit fermé à partir de la saumure préparée dans le bac 7′ peut recommencer.

Du bac de stockage 28, on injecte indépendamment dans le circuit principal 9′ la solution concentrée de NaC10 à travers une pompe doseuse 29, pilotée manuellement ou automatiquement par une sonde 21′ mesurant le taux de chlore actif dans le circuit principal comme décrit dans la figure 1. On se fixe deux seuils compris dans la fourchette règlementaire de taux admissible. Quand le taux mesuré par la sonde tombe au seuil minimum fixé ou à intervalle de cycle prédéterminé, on rajoute de la solution concentrée dudit bac 28 jusqu'à ce que le seuil maximum soit atteint dans le circuit principal.

A chaque rajout, le bac 28 se vide petit à petit et quand son niveau atteint un minimum, on le remplit à nouveau par la solution contenue et préparée dans le bac 26 et les cycles de fonctionnement décrits précédemment recommencent, soit par séquence de temps prédéterminé, soit par déclenchement de seuil minimum.

Comme nous l'avons décrit dans la figure 1, ce fonctionnement de sondes, de vannes, de cellules et de pompes, peut être contrôlé manuellement, mais aussi automatiquement à partir d'un automate programmable commandant une armoire de régulation.

Les séquences de mesures et de régulation sont ici différentes puisqu'il s'agit d'un fonctionnement en boucle fermée indépendante, donc plus simple car les séquences sont successives et non simultanées.

Le programme en est simplifié, mais les organes d'entrée et les commandes de sortie sont les mêmes, et la régulation des cellules plus difficile.

## Revendications

1. Procédé de désinfection des eaux de baignade par traitement de l'hypochlorite de sodium, en particulier pour les eaux de bassins, qui sont recyclées, d'une part dans un circuit principal de régénération (9, 9′) comportant entre autre un système de pompage (4, 4′) refoulant dans le fond desdits bassins, et d'autre part, dans un (18′) ou plusieurs (17, 18) circuits secondaires de dérivation en parallèle de ce circuit principal et comportant au moins un bac de mélange (7, 7′) pour la préparation d'une solution de chlorure de sodium et des cellules d'électrolyse (10, 10′) de tout type, dans des conditions telles qu'elle décompose le chlorure de sodium suivant des réactions électrochimiques connues, caractérisé en ce que :
- on prépare ladite solution de chlorure de sodium à un dosage au moins égal à 6 g/litre;
- on mesure dans ledit circuit principal (9, 9′) le pourcentage de chlore actif contenu dans l'eau du bassin (1, 1′) et on compare cette mesure à un niveau de consigne fixé et compris dans une plage qui peut être celle exigée par la règlementation;
- on mesure également dans le circuit principal (9′) de régénération ou dans un circuit secondaire (18) le niveau d'acidité de l'eau ou PH et on le compare par rapport à un niveau de consigne optimum respectant les normes règlementaires et pour le meilleur fonctionnement desdites cellules électrochimiques (10, 10′);
- on injecte alors dans le circuit principal la solution d'acide chlorhydrique dilué préparé dans un bac de mélange (8, 8′) secondaire, jusqu'à ce que le niveau d'acidité soit remonté au niveau de consigne;
- on sale au moins une partie de l'eau du circuit principal par addition de ladite solution de chlorure de sodium préparée dans le bac de mélange (7, 7′);
- on fait passer une quantité déterminée de cette eau salée à travers lesdites cellules (10, 10′) d'électrolyse pour obtenir la quantité d'hypochlorite de sodium nécessaire pour maintenir le taux de chlore actif à son niveau de consigne.

2. Procédé de désinfection des eaux suivant la revendication 1, caractérisé en ce que :
- on remplit ledit bassin (1) d'eau que l'on sale;
- on mesure dans ledit circuit principal (9) le pourcentage de chlorure de sodium dilué contenu dans l'eau et on le compare à un niveau de consigne, et si ledit pourcentage est en-dessous de celui-ci, on injecte dans le circuit principal une quantité connue de la solution concentrée de chlorure de sodium préparée dans le bac de mélange (7), jusqu'à ce que le taux de chlorure de sodium remonte à son niveau de consigne;
- on dévie une partie de l'eau du circuit principal (9) par une ou des vannes de by-pass vers lesdites cellules (10) d'électrolyse placées dans un autre circuit secondaire (18), suivant un débit et une durée calculées d'après la différence entre la mesure de pourcentage du chlore actif relevé et le circuit principal et la valeur du point de consigne fixé, et on met en marche le nombre de cellules (10) nécessaires pour traiter ledit débit et pour que chaque cellule fonctionne au mieux de son rendement;
- on réinjecte, après traitement électrochimique dans le circuit principal (9) le débit d'eau déviée, de façon à faire remonter le pourcentage de chlore actif dans ledit bassin (1), et quand celui-ci atteint son point de consigne ou après une durée de cycle donnée, on ferme le ou les vannes de by-pass et on arrête le fonctionnement des cellules.

3. Procédé de désinfection des eaux suivant la revendication 2, caractérisé en ce qu'on règle le fonctionnement desdites cellules (10), les débits d'eau déviés et injectés, les sondes et les points de consigne des taux de concentration, de telle façon que le pourcentage de chlorure de sodium dilué contenu dans l'eau du bassin (1) et du circuit principal (9) soit entre 2 et 6 g/litre pour un pourcentage de chlore actif compris entre 0,4 et 1,4 mg/litre dans le bassin (1).

4. Procédé de désinfection des eaux suivant la revendication 1, caractérisé en ce que :
- on injecte directement ladite solution concentrée de chlorure de sodium préparée dans le bac de mélange (7) dans un deuxième bac (26) dit de chloration, que l'on remplit;
- on fait circuler à partir de ce deuxième bac et en circuit fermé (18′) indépendant ladite solution sur lesdites cellules d'électrolyse (10′) et on mesure dans ledit circuit fermé le pourcentage de chlorure de sodium contenu initialement dans l'eau et qui doit atteindre au départ un point de consigne donné;
- on isole ledit circuit secondaire et après un temps de traitement déterminé, le bac de chloration(20) contient essentiellement alors une solution d'hypochlorite de sodium, on arrête la pompe de circulation secondaire (27) et lesdites cellules (10′);
- on injecte dans le circuit principal (9) une quantité déterminée de ladite solution d'hypochlorite de sodium de façon à remonter le pourcentage de chlore actif dans le bassin (1) au niveau de son point de consigne, chaque fois que sa mesure le rend nécessaire ou par cycle donné.

5. Procédé de désinfection des eaux suivant la revendication 4, caractérisé en ce qu'on règle le fonctionnement des cellules, les débits, les sondes et les points de consigne des taux de concentration, de telle façon que la concentration de chlore contenu dans le circuit secondaire (18′) avant injection dans le circuit principal (9′) est de 10 à 70 g/litre environ et celui de la concentration de chlorure de sodium amené dans le bac de chloration avant traitement par lesdites cellules (10) est entre 30 et 35 g/litre pour un pourcentage de chlore actif comprise entre 0,4 et 1,4 mg/litre dans le bassin (1).

6. Procédé de désinfection des eaux suivant l'une quelconque des revendications 1 à 5, caractérisé en ce que l'on règle l'installation pour que le niveau de consigne de l'acidité de l'eau dans le circuit principal de régénération (9, 9′) soit compris entre 7,1 et 7,4.

7. Installation de désinfection des eaux par le traitement à l'hypochlorite de sodium, en particulier de bassins de baignade, comportant, d'une part, un circuit principal de régénération (9, 9′) composé entre autre d'un système de pompage (4, 4′), refoulant dans le fond desdits bassins et, d'autre part, un (18′) ou plusieurs (17, 18) circuits secondaires de dérivation en parallèle de ce circuit principal et comportant au moins un bac de mélange (7, 7′), contenant une solution de chlorure de sodium et des cellules d'électrolyse (10, 10′) de tout type et qui sont réglées de manière connue de telle façon que le chlorure de sodium contenu dans l'eau qui passe à travers elles, soit décomposé pour obtenir de l'hypochlorite de sodium, caractérisée en ce que ladite installation comporte, en outre :
- des moyens pour renouveler la solution de chlorure de sodium préparée dans ledit bac de mélange (7, 7′) d'une part, par des rajouts extérieurs de sel, et d'autre part, par de l'eau du circuit principal déviée à la demande, de telle façon que la solution est concentrée à un dosage minimum de 6 g/litre;
- au moins une sonde de mesure (21, 21′) en continu par cycle de taux de chlore actif dans le circuit principal (9, 9′);
- un autre circuit secondaire (17, 17′), indépendant de celui contenant lesdites cellules (10, 10′) et branché en dérivation sur le circuit principal (9, 9′) et composé d'un bac (8, 8′) contenant une solution concentrée d'acide chlorhydrique renouvelée, d'une part, par des rajouts extérieurs d'acide et, d'autre part, par de l'eau du circuit principal (9, 9′) déviée à la demande et réinjectée dans celui-ci pour y conserver un taux d'acidité PH déterminé, lequel taux est contrôlé par une sonde de mesure (20, 20′), placée sur le circuit principal ou le circuit secondaire alimentant les cellules d'électrolyse (10, 10′);
- des vannes de dérivation et de by-pass (11 et 12, 25 et 32) et des moyens de type pompes doseuses (16, 16′, 27) et de circulation (19, 19′), qui permettent, d'une part, de saler à partir du bac de mélange (7, 7′) une quantité déterminée de l'eau du circuit principal (9, 9′) et, d'autre part, de diriger tout ou partie de cette eau salée vers ladite cellule d'électrolyse (10, 10′) afin d'obtenir dans le circuit principal un taux de chlore actif correspondant à un taux de consigne déterminé.

8. Installation de désinfection des eaux suivant la revendication 7, caractérisée en ce que chacun desdits circuits secondaires (17) incluant le bac de mélange (7) de solution de chlorure de sodium se reverse directement dans le circuit principal, dans lequel circule de l'eau salée en provenance et en direction du bassin (1), pour maintenir dans ledit circuit un taux de salinité contrôlé et mesuré par une sonde (22), conforme à un point de consigne, et lesdites cellules d'électrolyse (10) sont intégrées dans au moins un deuxième circuit secondaire dans lequel est déviée une partie de l'eau salée du circuit principal (9), suivant un débit, une durée et un nombre de cellules correspondant à la différence calculée par cycle ou suivant un seuil minimum entre le taux de chlore actif effectif mesurée par ladite sonde (21) correspondante et un taux de consigne.

9. Installation de désinfection des eaux suivant la revendication 7, caractérisée en ce que chacun desdits circuits secondaires (17′) incluant un bac de mélange (7′) de solution de chlorure de sodium alimente par cycle directement un bac dit de chloration (26) et suivant un taux de salinité contrôlé et mesuré par une sonde (22′), lequel bac est relié ensuite alternativement, d'une part en boucle fermée auxdites cellules d'électrolyse (10) à travers lesquelles ladite solution est traitée jusqu'à obtenir un taux déterminé de transformation du chlorure de sodium en hypochlorite de sodium et, d'autre part, au circuit principal (9), dans lequel est injectée à la demande ensuite la solution ainsi obtenue pour conserver dans celui-ci un taux de chlore actif mesuré par ladite sonde correspondante (21′) autour d'un taux d'un point de consigne donné.

10. Installation de désinfection des eaux suivant l'une quelconque des revendications 7 à 9, caractérisée en ce que lesdites cellules d'électrolyse (10) sont de type bipolaire, à plaques de titane revêtues d'oxyde de ruthénium, alimentées en courant continu variable basse tension, de préférence avec un maximum de 32 Volts sous une intensité de 300 à 900 Ampères/m² pour une concentration saline de l'eau de 2 à 30 g/litre d'eau.

11. Installation de désinfection des eaux d'une installation à plusieurs bassins disposant d'un seul circuit principal de régénération (9′), suivant l'une quelconque des revendications 7 à 10, caractérisée en ce que tous les circuits secondaires (17 et 18) contenant les bacs de préparation et de rajout de solutions concentrées (7 et 8), ainsi que les cellules d'électrolyse (10) sont communs et, en nombre et de dimensions adaptés au traitement de tous les bassins en même temps, et les injections de la solution d'eau traitée en sortie desdites cellules et contenant l'hypochlorite de sodium, et celles en sortie du ou des bacs de solution d'acide chlorhydrique se font bassin par bassin, suivant le besoin déterminé par les sondes de mesure de chlore actif (21) placées dans chaque bassin.

12. Installation de désinfection des eaux suivant l'une quelconque des revendications 7 à 11, caractérisée en ce qu'elle comporte une armoire de régulation commandée par un automate programmable, dans la mémoire duquel sont définis les points de consigne correspondant aux seuils fixés pour chaque taux de concentration, qui reçoit les informations de mesures des sondes correspondant aux concentrations réelles effectives, qui calcule les débits et les temps de traitement et de dérivation nécessaires pour corriger les concentrations réelles afin qu'elles atteignent leur point de consigne, et qui pilote en conséquence lesdites vannes, lesdites cellules (10) et les moyens de circulation et de pompage.

## Patentansprüche

1. Verfahren zur Entkeimung der Badewässer durch Natriumhypochloritbehandlung, insbesondere für die Beckenwässer, die im Kreislauf, einerseits in einem Hauptregenerierkreis (9, 9′) mit u.a. einem in den Boden der Becken fördernden Pumpsystem (4, 4′) und andererseits in einem oder mehreren, mit dem Hauptkreis parallelen sekundären Abzweigkreisen (17, 18) mit wenigstens einem Mischbelhälter (7, 7′) für die Herstellung einer Natriumchloridlösung und Elektrolysezellen (10, 10′) jeder Art unter solchen Bedingungen geführt werden, daß sie das Natriumchlorid nach bekannten electrochemischen Reaktionen zersetzt,
dadurch **gekennzeichnet,**
daß man die Natriumchloridlösung mit einer Dosierung von wenigstens gleich 6g/Liter herstellte;
- man im Hauptkreis (9, 9′) den Prozentsatz im Wasser des Beckens (1, 1′) enthaltenen aktiven Chlors mißt und diese Messung mit einem Richtwert vergleicht, der festgelegt ist und in einem Bereich liegt, der der von der Vorschrift erforderte sein kann;
- man auch im Hauptregenerierkreis (9′) oder in einem Sekundärkreis (18) das Aziditätsniveau des Wassers oder den pH-Wert mißt und es bzw. ihn bezüglich eines Optimumrichtniveaus unter Berücksichtigung der Vorschriftsnormen und des besten Betriebs der elektrochemischen Zellen (10, 10′) vergleicht;
- man dann in den Hauptkreis die in einem sekundären Mischbehälter (8, 8′) hergestellte verdünnte Salzsäurelösung einführt, bis das Aziditätsniveau auf das Richtniveau gestiegen ist;
- man wenigstens einen Teil des Wassers des Hauptkreises durch Zusatz der im Mischbehälter (7, 7′) hergestellten Natriumchloridlösung salzt;
- man eine bestimmte Menge dieses gesalzten Wassers die Elektrolysezellen (10, 10′) durchlaufen läßt, um die zum Halten des Anteils an aktivem Chlor auf seinem Richtwert erforderliche Hypochloritmenge zu erhalten.

2. Verfahren zum Entkeimen der Wässer nach Anspruch 1,
dadurch gekennzeichnet,
daß man das Becken (1) mit Wasser füllt, das man salzt,
- man im Hauptkreis (9) den Prozentsatz des im Wasser enthaltenen verdünnten Natriumchlorids mißt und ihn mit einem Richtwert vergleicht und, wenn der Prozentsatz unter diesem ist, in den Hauptkreis eine bekannte Menge der im Mischbehälter (7) hergestellten konzentrierten Natriumchloridlösung enführt, bis der Natriumchloridgehalt auf seinen Richtwert steigt;
- man einen Teil des Wassers des Hauptkreises (9) durch ein oder mehrere Bypassventile zu den in einem anderen Sekundärkreis (18) angeordneten Elektrolysezellen (10) entsprechend einem Durchsatz und einer Dauer ableitet, die nach dem Unterschied zwischen der Messung des Prozentsatzes des erfaßten aktiven Chlors und dem Hauptkreis und dem Wert des festgelegten Richtpunktes berechnet werden, und die Zahl von Zellen (10) in Betrieb setzt, die zum Behandeln dieses Durchsatzes und dafür erforderlich sind, daß jede Zelle mit bestem Wirkungsgrad arbeitet;
- man nach elektrochemischer Behandlung in den Hauptkreis (9) den Durchsatz abgeleiteten Wassers derart wieder einführt, daß der Prozentsatz aktiven Chlors im Becken (1) ansteigt, und man, wenn dieser seinen Richtpunkt erreicht oder nach einer gegebenen Zyklusdauer das oder die Bypassventile schließt und den Betrieb der Zellen unterbricht.

3. Verfahren zur Entkeimung der Wässer nach Anspruch 2,
dadurch gekennzeichnet,
daß man den Betrieb der Zellen (10), die Durchsätze von abgeleitetem und eingeführtem Wasser, die Sonden und die Richtpunkte der Konzentrationsgrade derart reguliert, daß der Prozentsatz von im Wasser des Beckens (1) und des Hauptkreises (9) enthaltenem verdünnten Natriumchlorid zwischen 2 und 6 g/Liter für einen Prozentsatz von aktivem Chlor im Bereich von 0,4 bis 1,4 mg/Liter im Becken (1) ist.

4. Verfahren zur Entkeimung der Wässer nach Anspruch 1,
dadurch gekennzeichnet,
daß man direkt die im Mischbehälter (7) hergestellte konzentrierte Natriumchloridlösung in einen zweiten, sog. Chlorierungsbehälter (26) einführt, den man füllt;
- man aus diesem zweiten Behälter und im geschlossenen unabhängigen Kreis (18′) diese Lösung über die Elektrolysezellen (10′) laufen lädt und im geschlossenen Kreis den Prozentsatz von anfangs im Wasser enthaltenem Natriumchlorid und der am Anfang einen gegebenen Richtpunkt erreichen muß, mißt;
- man den Sekundärkreis isoliert, und nach einer bestimmten Behandlungsdauer der Chlorierungsbehälter (20) im wesentlichen dann eine Natriumhypochloritlösung enthält, man die Sekundärkreislaufpumpe (27) und die Zellen (10′) abschaltet,
- man in den Hauptkreis (9) eine bestimmte Menge der Natriumhypochloritlösung derart einführt, daß der Prozentsatz aktiven Chlors im Becken (1) auf die Höhe seines Richtpunktes jedesmal, wenn es seine Messung nötig macht, oder in einem gegebenen Zyklus ansteigt.

5. Verfahren zur Entkeimung der Wässer nach Anspruch 4,
dadurch gekennzeichnet,
daß man den Betrieb der Zellen, die Durchsätze, die Sonden und die Richtpunkte der Konzentrationsgrade derart reguliert, daß die Konzentration von im Sekundärkreis (18′) vor der Einführung in den Hauptkreis (9′) enthaltenem Chlor etwa 10 bis 70 g/Liter ist und die Konzentration von in den Chlorierungsbehälter eingeführtem Natriumchlorid vor Behandlung durch die Zellen (10) zwischen 30 und 35 g/Liter für einen Prozentsatz aktiven Chlors im Bereich von 0,4 bis 1,4 mg/Liter im Becken (1) ist.

6. Verfahren zur Entkeimung der Wässer nach irgendeinem der Ansprüche 1 bis 5,
dadurch gekennzeichnet,
daß man die Anlage so reguliert, daß die Richthöhe der Azidität des Wassers im Hauptregenerierkreis (9, 9′) im Bereich von 7,1 bis 7,4 liegt.

7. Anlage zur Entkeimung der Wässer durch die Behandlung mit Natriumhypochlorit, insbesondere von Badebecken die einerseits einen Hauptregenerierkreis (9, 9′), der u.a. aus einem in dem Boden der Becken fördernden Pump-system (4, 4′) besteht, und andererseits einem (18′) oder mehreren (17, 18) mit dem Hauptkreis parallelen sekundären Abzweigkreisen mit wenigsten einem Mischbehälter (7, 7′) zusammengesetzt ist, der eine Natriumchloridlösung und Elektrolysezellen (10, 10′) jeder Art und solcher Regulierung in bekannter Weise, daß das im sie durchlaufenden Wasser enthaltene Natriumchlorid zersetzt wird, um Natriumhypochlorit zu erhalten, enthält,
dadurch gekennzeichnet,
daß die Anlage außerdem enthält:
- Mittel zum Erneuern der im Mischbehälter (7, 7′) hergestellten Natriumchloridlösung einerseits durch äußere Salzzusätze und andererseits durch nach dem Bedarf abgeleitetes Wasser des Hauptkreises derart, daß die Lösung auf eine Mindestdosierung von 6g/Liter konzentriert wird;
- wenigstens eine Sonde (21, 21′) zum ständigen zyklischen Messen des Gehaltes an aktivem Chlor im Hauptkreis (9, 9′);
- einem weiteren Sekundärkreis (17, 17′), der von dem die Zellen (10, 10′) enthaltenden unabhängig und in Ableitung von Hauptkreis (9, 9′) abgezweigt ist und aus einem Behälter (8, 8′) besteht, der eine konzentrierte Salzsäurelösung enthält, die einerseits durch äußere Säurezusätze und andererseits durch Wasser des Hauptkreises (9, 9′) erneuert wird, das nach dem Bedarf abgeleitet und in diesen wieder eingeführt wird, um darin einen bestimmten pH-Aziditätsgrad zu bewahren, welcher Grad durch eine Meßsonde (20, 20′) überwacht wird, die im Hauptkreis oder in dem die Elektrolysezellen (10, 10′) speisenden Sekundärkreis angeordnet ist;
- Ableit- und Bypassventile (11 und 12, 25 und 32) und Mittel vom Dosierpumpentyp (16, 16′, 27) und zur Zirkulation (19, 19′), die einerseits ausgehend vom Mischbehälter (7, 7′), das Salzen einer bestimmten Menge des Wassers des Hauptkreises (9, 9′) und andererseits das Leiten der Gesamtheit oder eines Teils dieses gesalzenen Wassers zur Elektrolysezelle (10, 10′) ermöglichen, um im Hauptkreis einen einem bestimmten Richtgehalt entsprechenden Gehalt an aktivem Chlor zu erhalten.

8. Anlage zur Entkeimung der Wässer nach Anspruch 7,
dadurch gekennzeichnet,
daß jeder Sekundärkreise (17) mit dem Natriumchloridlösung-Mischbehälter (7) direkt in den Hauptkreis zurückkehrt, in dem das gesalzene Wasser von und in Richtung zum Becken (1) zirkuliert, um in diesem Kreis einen Salinitätsgrad aufrechtzuerhalten, der von einer Sonde (22) gemäß einem Richtpunkt überwacht und gemessen wird, und die Elektrolysezellen (10) in wenigstens einem zweiten Sekundärkreis integriert sind, in dem ein Teil des gesalzenen Wassers des Hauptkreises (9) gemäß einem Durchsatz, einer Dauer und einer Zahl von Zellen entsprechend der je Zyklus berechneten Differenz oder einer Mindestschwelle zwischen dem durch die entsprechende Sonde (21) gemessenen tatsächlichen Gehalt an aktivem Chlor und einem Richtgehalt abgeleitet wird.

9. Anlage zur Entkeimung der Wässer nach Anspruch 7,
dadurch gekennzeichnet,
daß jeder der Sekundärkreise (17′) mit einem Natrium-chloridlösungs-Mischbehälter (7′) zyklisch direkt einen sog. Chlorierungsbehälter und entsprechend einem durch eine Sonde (22′) überwachten und gemessenen Salinitätsgrad speist, dieser Behälter anschließend alternativ einerseits in geschlossener Schleife mit den Elektrolysezellen (10), durch die hindurch die Lösung behandelt wird, bis ein bestimmter Umwandlungsgrad des Natriumchlorids in Natriumhypochlorit erhalten ist, und andererseits mit dem Hauptkreis (9) verbunden wird, in den nach dem Bedarf anschließend die so erhaltene Lösung eingeführt wird, um darin einen durch die entsprechende Sonde (21) gemessenen Gehalt an aktivem Chlor nahe einem Gehalt eines gegebenen Richtpunktes zu bewahren.

10. Anlage zur Entkeimung der Wässer nach irgendeinem der Ansprüche 7 bis 9,
dadurch gekennzeichnet,
daß die Elektrolysezellen (10) vom bipolaren Typ mit mit Rutheniumoxid beschichteten Titanplatten sind, die mit Gleichstrom variabler Niederspannung, vorzugsweise mit einem Maximum von 32 Volt bei einer Stärke von 300 bis 900 Ampere/m² bei einer Salzkonzentration des Wassers von 2 bis 30 g/Liter Wasser gespeist werden.

11. Anlage zur Entkeimung der Wässer einer Anlage mit mehreren Becken, ausgeführt mit einem einzigen Hauptgenerierkreis (9′), nach irgendeinem der Ansprüche 7 bis 10,
dadurch gekennzeichnet,
daß alle Sekundärkreise (17 and 18), die die Behälter (7 und 8) zur Herstellung und Zufügung konzentrierter Lösungen enthalten, sowie die Elektrolysezellen (10) gemeinsam und nach Zahl und Abmessungen zur Behandlung aller Becken zur gleichen Zeit geeignet sind und daß die Einführungen der Lösung behandelten Wassers am Ausgang der Zellen mit Gehalt des Natriumhypochlorits und diejenigen am Ausgang des oder der Salzsäurelösungsbehälter Becken nach Becken entsprechend dem durch die in jedem Becken angeordneten Sonden (21) zur Messung aktiven Chlors bestimmten Bedarf erfolgen.

12. Anlage zur Entkeimung der Wässer nach irgendeinem der Ansprüche 7 bis 11,
dadurch gekennzeichnet,
daß sie einen Regulierschrank aufweist, der von einem programmierbaren Automat gesteuert wird, in dessen Speicher die Richtpunkte entsprechend den festgelegten Schwellen für jeden Konzentrationsgrad bestimmt sind, der die Messungsinformationen der Sonden entsprechend den real vorliegenden Konzentrationen erhält, der die Durchsätze und die Zeiten der Behandlung und der Ableitung berechnet, die zur Korrektur der tatsächlichen Konzentrationen erforderlich sind, damit sie ihren Richtpunkt erreichen, und der folglich die Ventile, die Zellen (10) und die Zirkulations- und Pumpmittel steuert.

## Claims

1. Method for the disinfection of bathing water by treatment with sodium hypochlorite, particularly for pool water which is recycled, on the one hand in a main regeneration circuit (9, 9′) which comprises, inter alia, a pumping system (4, 4′) forcing back the water in the bottom of said pools, and on the other hand, in one (18′) or more (17, 18) secondary circuit by-passing in parallel said main circuit and comprising at least one mixing tank (7, 7′) for the preparation of a solution of sodium chloride and electrolytic cells (10, 10′) of all types, in conditions such that that the sodium chloride is decomposed by conventionally known electrochemical reactions, characterized in that :
- said sodium chloride solution is prepared in a proportion at least equal to 6 g/litre;
- the proportion of active chloride contained in the water of the pool (1, 1′) is measured in said main circuit (9, 9′) and the measured value is compared with a set index value which is comprised within a range which may be that required by regulations;
- the level of acidity of the water or pH in the main regeneration circuit (9′) is also measured and compared with an optimum index level which follows the specified norms and is set so as to improve the operation of said electrochemical cells (10, 10′);
- then the solution of diluted hydrochloric acid prepared in a secondary mixing tank (8, 8′) is injected into the main circuit, until the level of acidity reaches the index level;
- at least part of the water of the main circuit is salted by addition of said solution of sodium chloride prepared in the mixing tank (7, 7′);
- a set quantity of said salted water is caused to pass through said electrolytic cells (10, 10′) in order to obtain the quantity of sodium hypochlorite necessary to keep the rate of active chloride to its index level.

2. Method for the disinfection of water according to claim 1, characterized in that :
- said pool (1) is filled with water which is salted;
- the proportion of diluted sodium chloride contained in the water is measured and compared with an index level, and if the proportion is below said index level, a known quantity of the concentrated sodium chloride solution prepared in the mixing tank (7) is injected into the main circuit, until the sodium chloride content returns to its index level;
- part of the water of the main circuit (9) is deviated by one or more by-pass valves, towards said electrolytic cells (10) placed in another secondary circuit (18), at a flowrate and for a time period which are calculated from the difference between the proportion of active chloride measured in the main circuit and the set value of the index point, and the number of cells (10) necessary for treating said flow and for obtaining the best production from each cell, is set to work;
- after electrochemical treatment, the flow of deviated water is re-injected into the main circuit (9), so as to raise the proprotion of active chloride in the pool (1), and when this proportion has reached it index point, or after a given cycle period, the by-pass valve or valves are closed and the cells are stopped.

3. Method for the disinfection of water according to claim 2, characterized in that the working of said cells (10), the deviated and injected flows of water, the probes and the index points of the concentration rates, are adjusted so that the proportion of diluted sodium chloride contained in the water of the pool (1) and of the main circuit (9) is between 2 and 6 g/litre for a proportion of active chloride comprised between 0.4 and 1.4 mg/litre in the pool (1).

4. Method for the disinfection of water according to claim 1, characterized in that:
- said concentrated sodium chloride solution prepared in the mixing tank (7) is injected directly in a second tank (26) called chlorination tank, which is filled;
- said solution is caused to flow from said second tank and in an independent closed circuit (18'), over said electrolytic cells (10′) and the proportion of sodium chloride initially contained in the water of said closed circuit and which, at the start, should reach a set index point, is measured;
- said secondary circuit is isolated and, after a set treatment period, the chlorination tank (20) then containing essentially a solution of sodium hypochlorite, the secondary feed pump (27) and said cells (10′) are stopped;
- a set quantity of said solution of sodium hypochlorite is injected into the main circuit (9) in order to raise the content of active chlorine in the pool (1) to the level of its index point, each time its measurement makes it necessary or by given cycle.

5. Method for the disinfection of water according to claim 4, characterized in that the operation of the cells, the flowrates, the probes and the index points of the concentration rates are adjusted so that the concentration of chlorine contained in the secondary circuit (18′) before injection into the main circuit (9′) is between about 10 and 70 g/litre and that of the sodium chloride brought into the chlorination tank before treatment by said cells (10) is between 30 and 35 g/litre for an actibe chlorine content of between 0.4 and 1.4 mg/litre in the pool (1).

6. Method for the disinfection of water according to any one of claims 1 to 5, characterized in that the installation is adjusted so that the index level of the acidity of the water in the main regeneration circuit (9, 9′) is comprised between 7.1 and 7.4.

7. Installation for the disinfection of water, particularly the water of bathing pools, by treatment with sodium comprising, on the one hand, a main regeneration circuit (9, 9′), composed inter alia, of a pumping system (4, 4′) forcing back the water in the bottom of said pools, and on the other hand, one (18′) or more (17, 18) secondary circuits by-passing in parallel said main circuit and comprising at least one mixing tank (7, 7′) containing a solution of sodium chloride and electrolytic cells (10, 10′) of all types which are adjusted so that the sodium chloride contained in the water flowing through them, is decomposed so as to give sodium hypochlorite, characterized in that said installation further comprises:
- means for renewing the solution of sodium chloride prepared in said mixing tank (7, 7′), on the one hand, with external adjunctions of salt, and on the other hand, with water from the main circuit deviated as required, so that the solution is concentrated in a minimum proportion of 6 g/litre;
- at least one measuring probe (21, 21′) for continuously measuring, for each cycle, the content of active chlorine in the main circuit (9, 9′);
- another secondary circuit (17, 17′), independent of that containing said cells (10, 10′) and by-passing the main circuit (9, 9′), composed of a tank (8, 8′) containing a concentrated solution of hydrochloric acid, renewed, on the one hand by external adjunctions of acid, and on the other hand by water from the main circuit (9, 9′) deviated as required and re-injected in said conduit so as to keep therein a set rate of acidity or pH, which rate is controlled by a measuring probe (20, 20′) placed in the main circuit or in the secondary circuit supplying the electrolytic cells (10, 10′);
- by-pass valves (11 and 12, 25 and 32) and means of metering pump type (16, 16′, 27) or feed pump type (19, 19′) making it possible, on the one hand, to salt, in the mixing tank (7, 7′), a set quantity of water from the main circuit (9, 9′) and, on the other hand, to direct all or part of said salted water towards said electrolytic cell (10, 10′) in order to obtain in the main circuit a content of active chloride which corresponds to a set index content.

8. Installation for the disinfection of water according to claim 7, characterized in that each one of said secondary circuits (17) including the mixing tank (7) for the solution of sodium chloride empties itself directly into the main circuit in which the salted water flows in from and out towards pool (1), in order to keep in said circuit, a controlled salinity rate measured by a probe (22), in conformity with an index point, and said electrolytic cells (10) are integrated in at least a second secondary circuit in which part of the salted water of the main circuit (9) is deviated, according to a flowrate, a duration and a number of cells corresponding to the difference calculated for each cycle or in relation to a minimum threshold between the rate of effective active chlorine measured by said corresponding probe (21) and an index rate.

9. Installation for the disinfection of water according to claim 7, characterized in that each one of said secondary circuits (17′) including a mixing tank (7′) for the solution of sodium chloride directly supplies by cycle a tank called chlorination tank (26) according to a controlled rate of salinity measured by a probe (22′), which tank is then alternately connected, on the one hand, in closed loop, to said electrolytic cells (10) through which said solution is treated until a set rate of transformation of the sodium chloride into sodium hypochlorite is obtained, and on the other hand, to the main circuit (9), into which the resulting solution is thereafter injected as required, in order to keep in said main circuit, a rate of active chlorine measured by said corresponding probe (21′) to around a set index point.

10. Installation for the disinfection of water according to any one of claims 7 to 9, characterized in that said electrolytic cells (10) are of bipolar type, with titanium plates coated with ruthenium oxide fed with direct current of variable low voltage, preferably with a maximum of 32 V under an intensity of 300 to 900 Amps/m2 for a salt concentration of the water of 2 to 30 g/litre of water.

11. Installation for the disinfection of water in a plant with a plurality of pools having only one main regeneration circuit (9′), according to any one of claims 7 to 10, characterized in that all the secondary circuits containing the tanks for the preparation and adjunction of concentrated solutions (7 and 8), as well as the electrolytic cells (10) are common, and their number and dimensions are adapted to the treatment of all the pools at the same time, and the injections of the solution of water treated on flowing out of the tanks of hydrochloric acid solution are done pool by pool, depending on the needs determined by the probes measuring the active chloride (21) placed in each pool.

12. Installation for the disinfection of water according to any one of claims 7 to 11, characterized in that it comprises a control box controlled by a programmable controller, in the memory of which are defined the index points corresponding to the thresholds fixed for each concentration rate, which controller receives the information from the measuring probe corresponding to the real effective concentrations, calculates the flowrates and the treatment and derivation times necessary for correcting the real concentrations so that they reach their index point, and consequently controls said valves, said cells (10) and the flowing and pumping means.
